# EUROPEAN PATENT SPECIFICATION

(11) **EP 3 096 502 B1**
(45) Date of publication and mention of the grant of the patent: **18.11.2020**
(21) Application number: 16157934.7
(22) Date of filing: 29.02.2016
(51) Int. Cl.: H04W 12/06, H04L 29/06, H04W 12/00, H04W 76/14, H04W 76/15, H04W 76/18

(54) **METHOD, APPARATUS AND SYSTEM FOR MANAGING CONTROL RELATIONSHIPS BETWEEN ACCOUNT AND DEVICE**
VERFAHREN, VORRICHTUNG UND SYSTEM ZUR VERWALTUNG VON STEUERUNGSBEZIEHUNGEN ZWISCHEN KONTO UND VORRICHTUNG
PROCÉDÉ, APPAREIL ET SYSTÈME POUR GÉRER DES RELATIONS DE COMMANDE ENTRE UN COMPTE ET UN DISPOSITIF

(30) Priority: 21.05.2015 CN 201510263489
(43) Date of publication of application: 23.11.2016
(73) Proprietor: Xiaomi Inc., Beijing 100085 (CN)
(72) Inventor: HOU, Enxing, Beijing 100085 (CN); YIN, Mingjun, Beijing 100085 (CN); GAO, Ziguang, Beijing 100085 (CN)
(74) Representative: Cabinet Beau de Loménie

(56) References cited:
- EP-A1- 2 020 784
- WO-A1-2015/019646
- CN-A- 104 202 306
- CN-A- 104 617 987
- CN-A- 104 618 440
- GB-A- 2 518 691
- US-A1- 2013 110 936
- US-A1- 2013 254 304

## Description

### TECHNICAL FIELD

The present disclosure generally relates to electronic technology, and more particularly, to a method, an apparatus and a system for managing control relationships between an account and a device.

### BACKGROUND

With rapid development of electronic technology, various kinds of smart device emerge, such as smart refrigerator, smart air conditioner, smart switch and the like. Such smart devices may be controlled by a terminal of a user such as mobile phone, personal computer and the like.

Generally, a method for controlling a smart device by the terminal such as a mobile phone may be implemented as follows. Association relationships between the smart device and user accounts are stored on a server. When the smart device is required to be controlled, a control request related to the smart device may be transmitted to the server by the terminal. The server determines whether there is stored an association relationships between a user account issuing the control request and the smart device. If yes, the server may instruct the smart device to perform a corresponding operation according to the control request. Otherwise, the server may ignore the control request transmitted from the terminal.

At least a following problem was found in implementation of the method.

Based on the control method described above, the smart device may be controlled only by one account associated with the smart device. For other users who intend to control the smart device by their terminals, they shall not be allowed to control the smart device unless the account currently associated with the smart device is released and the terminals of these users request to establish association relationships with the smart device. Therefore, the method in the prior art is inefficient to manage control relationships between devices and accounts.

Documents WO 2015/0196646, US 2013/110936, EP 2 506 232, US 2013/254304, CN 104 618 440, EP 2 020 784, CN 104 202 306 and CN 104 617 987 disclose known methods for controlling devices.

### SUMMARY

The present invention is defined in the independent claims. The dependent claims define embodiments of the present invention.

In order to overcome problems existing in related art, embodiments of the present disclosure provide a method, an apparatus and a system for managing control relationships between an account and a device. Technical solutions may be provided as follows.

According to a first aspect of the invention, there is provided a method for managing control relationships between an account and a device. The method is implemented by a server and includes: receiving a device association request sent from a first terminal, the device association request carrying a device identifier of a target device broadcasted from the target device and a first account identifier corresponding to an account logged in at the first terminal; determining a second account identifier corresponding to a primary control account associated with the target device; transmitting an association inquiry message to a second terminal where an account corresponding to the second account identifier is logged in, the association inquiry message carrying the first account identifier and the device identifier; and
recording the account corresponding to the first account identifier as an auxiliary control account of the target device if a first acknowledgement message corresponding to the association inquiry message is received from the second terminal. The first acknowledgement message carries one or more control rights granted to the first terminal and selected by a user of the second terminal from options of all control rights over the target device before the user clicks a confirm key according to association inquiry information generated by the second terminal and displayed in a form of the options when the server transmits the association inquiry message to the second terminal.

Alternatively, the method further includes: transmitting to the first terminal an association success notification message in response to the device association request if the first acknowledgement message corresponding to the association inquiry message is received from the second terminal; and transmitting to the first terminal an association failure notification message in response to the device association request if the first acknowledgement message is not received from the second terminal in a preset time period after transmission of the association inquiry message or if a second acknowledgement message in response to the association inquiry message is received from the second terminal.

Alternatively, the device association request further carries at least one control right selected from a plurality of control rights over the target device. The association inquiry message further carries the at least one control right over the target device.

Alternatively, the method further includes: receiving a control request aiming at the target device sent from the first terminal, the control request carrying the first account identifier, the device identifier of the target device and control parameters information; and transmitting a control message to the target device according to the control parameters information, if the account corresponding to the first account identifier is determined as the auxiliary control account of the target device based on a local record, to enable the target device to perform a process corresponding to the control message.

Alternatively, the method further includes: recording said one or more control rights for the account corresponding to the first account identifier over the target device.

Alternatively, the device association request further carries the second account identifier corresponding to the primary control account associated with the target device. Determining the second account identifier corresponding to said primary control account associated with the target device includes: acquiring the second account identifier carried in the device association request.

Alternatively, determining said second account identifier corresponding to said primary control account associated with the target device includes: acquiring the second account identifier locally prestored corresponding to said primary control account associated with the target device.

According to a second aspect of the invention, there is provided a method for managing control relationships between an account and a device. The method is implemented by a first terminal and includes: receiving a notification message broadcasted from a target device associated with a second account identifier corresponding to a primary control account, the notification message carrying a device identifier of the target device; displaying association prompt information aiming at the target device; transmitting to a server a device association request carrying the device identifier of the target device and a first account identifier corresponding to an account logged in locally if an association instruction aiming at the target device is received, so that the first user account may serve as an auxiliary control account of the target device; and receiving an association success notification message or an association failure notification message sent from the server in response to the device association request. The association success notification message includes one or more control rights granted to the first terminal and selected by a user of a second terminal from options of all control rights over the target device before the user clicks a confirm key according to association inquiry information generated by the second terminal and displayed in a form of the options when the server, after receiving the device association request from the first terminal, transmits an association inquiry message to the second terminal.

Alternatively, the device association request further carries at least one control right selected from a plurality of control rights over the target device.

Alternatively, the method further includes: transmitting to the server a control request aiming at the target device, the control request carrying the first account identifier, the device identifier of the target device and control parameters information.

Alternatively, the notification message further carries a device type of the target device.

Displaying said association prompt information aiming at the target device includes: displaying the association prompt information including the device type of the target device.

Alternatively, the notification message further carries said second account identifier corresponding to said primary control account associated with the target device; and the device association request further carries the second account identifier.

According to a third aspect of the invention, there is provided a server. The server may include: a reception module configured to receive a device association request sent from a first terminal, the device association request carrying therein a device identifier of a target device broadcasted from the target device and a first account identifier corresponding to an account logged in at the first terminal; a determination module configured to determine a second account identifier corresponding to a primary control account associated with the target device; a transmission module configured to transmit an association inquiry message to a second terminal where an account corresponding to the second account identifier is logged in, the association inquiry message carrying the first account identifier and the device identifier; and a record module configured to record the account corresponding to the first account identifier as an auxiliary control account of the target device if a first acknowledgement message corresponding to the association inquiry message is received from the second terminal.

Alternatively, the transmission module is further configured to transmit to the first terminal an association success notification message in response to the device association request if the first acknowledgement message corresponding to the association inquiry message is received from the second terminal; or transmit to the first terminal an association failure notification message in response to the device association request if the first acknowledgement message is not received from the second terminal in a preset time period after transmission of the association inquiry message or if a second acknowledgement message in response to the association inquiry message is received from the second terminal.

Alternatively, the device association request further carries therein at least one of a plurality of control rights over the target device; and the association inquiry message further carries therein the at least one of a plurality of control rights over the target device.

Alternatively, the reception module is further configured to receive a control request aiming at the target device sent from the first terminal, the control request carrying the first account identifier, the device identifier of the target device and control parameters information. The transmission module is further configured to transmit a control message to the target device according to the control parameters information, if the account corresponding to the first account identifier is determined as the auxiliary control account of the target device based on a local record, to enable the target device to perform a process corresponding to the control message.

Alternatively, the first acknowledgement message carries therein at least one control right among a plurality of control rights over the target device. The record module is further configured to record a control right for the account corresponding to the first account identifier over the target device as including the at least one control right.

Alternatively, the device association request further carries therein the second account identifier corresponding to the primary control account associated with the target device. The determination module is configured to acquire the second account identifier carried in the device association request.

Alternatively, the determination module is configured to acquire the second account identifier locally prestored corresponding to a primary control account associated with the target device.

According to a fourth aspect of the invention, there is provided a terminal. The terminal may include: a reception module configured to receive notification message broadcasted from a target device, the notification message carrying therein a device identifier of the target device; a display module configured to display association prompt information aiming at the target device; and a transmission module configured to transmit to a server a device association request carrying therein the device identifier of the target device and a first account identifier corresponding to an account logged in locally if an association instruction aiming at the target device is received.

Alternatively, the reception module is further configured to receive an association success message or an association failure message sent from the server responsive to the device association request.

Alternatively, the device association request further carries therein at least one of a plurality of control rights over the target device.

Alternatively, the transmission module is further configured to transmit to the server a control request aiming at the target device, the control request carrying therein the first account identifier, the device identifier of the target device and control parameters information.

Alternatively, the notification message further carries therein a device type of the target device. The display module is configured to display the association prompt information including the device type of the target device.

Alternatively, the notification message further carries therein a second account identifier corresponding to a primary control account associated with the target device; and the device association request further carries therein the second account identifier.

According to a fifth aspect of the invention, there is provided a server for managing control relationships between an account and a device, including: a processor and a memory for storing instructions executable by the processor. The processor is configured to: receive a device association request sent from a first terminal, the device association request carrying a device identifier of a target device broadcasted from the target device and a first account identifier corresponding to an account logged in at the first terminal; determine a second account identifier corresponding to a primary control account associated with the target device; transmit an association inquiry message to a second terminal where an account corresponding to the second account identifier is logged in, the association inquiry message carrying the first account identifier and the device identifier; and record the account corresponding to the first account identifier as an auxiliary control account of the target device if a first acknowledgement message corresponding to the association inquiry message is received from the second terminal. The first acknowledgement message carries one or more control rights granted to the first terminal and selected by a user of the second terminal from options of all control rights over the target device before the user clicks a confirm key according to association inquiry information generated by the second terminal and displayed in a form of the options when the server transmits the association inquiry message to the second terminal.

According to a sixth aspect of the invention, there is provided a terminal for managing control relationships between an account and a device, including: a processor and a memory for storing instructions executable by the processor. The processor is configured to: receive a notification message broadcasted from a target device associated with a second account identifier corresponding to a primary control account, the notification message carrying a device identifier of the target device; display an association prompt aiming at the target device; transmit to a server a device association request carrying the device identifier of the target device and a first account identifier corresponding to an account logged in locally if an association instruction aiming at the target device is received, so that the first user account may serve as an auxiliary control account of the target device; and receive an association success notification message or an association failure notification message sent from the server in response to the device association request. The association success notification message includes one or more control rights granted to the first terminal and selected by a user of a second terminal from options of all control rights over the target device before the user clicks a confirm key according to association inquiry information generated by the second terminal and displayed in a form of the options when the server, after receiving the device association request from the first terminal, transmits an association inquiry message to the second terminal.

According to a seventh aspect of the invention, there is provided a system for managing control relationships between an account and a device. The system includes a server, a first terminal and a second terminal. The first terminal is configure to receive a notification message broadcasted from a target device, the notification message carrying a device identifier of the target device, display an association prompt aiming at the target device, and transmit to the server a device association request carrying the target identifier of the target device and a first account identifier corresponding to an account logged in locally. The server is configured to receive the device association request transmitted by the first terminal, determine a second account identifier corresponding to a primary control account associated with the target device, transmit an association inquiry message to the second terminal where an account corresponding to the second account identifier is logged in, the association inquiry message carrying the first account identifier and the device identifier, and record the account corresponding to the first account identifier as an auxiliary control account of the target device if a first acknowledgement message corresponding to the association inquiry message is received from the second terminal.

The advantages and features of the terminals, apparatus and server according to the embodiments of the present disclosure are the same with those of the above described methods and will not be repeated here.

Alternatively, the steps of the methods for managing control relationships between an account and a device are determined by computer program instructions.

Consequently, according to an eighth aspect, the invention is also directed to a computer program for executing the steps of the methods for managing control relationships between an account and a device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Following advantageous effect may be achieved by the technical solutions provided in the embodiments of the present disclosure.

In the embodiment of the present disclosure, the device association request, carrying therein the device identifier of the target device broadcasted from the target device and the first account identifier corresponding to the account logged in at the first terminal, is received from the first terminal; the second account identifier corresponding to the primary control account associated with the target device is determined; the association inquiry message, carrying therein the first account identifier and the device identifier, is transmitted to the second terminal where the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations to frequently release control relationship between the target device and an account currently associated therewith if a plurality of accounts want to control the target device. Thus, efficiency of establishing the control relationships between the device and accounts can be improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for managing control relationships between an account and a device according to an exemplary embodiment.
Fig. 2 is a flow chart illustrating a method for managing control relationships between an account and a device according to an exemplary embodiment.
Fig. 3 is a block diagram illustrating a system according to an exemplary embodiment.
Fig. 4 is a flow chart illustrating a method for managing control relationships between an account and a device according to an exemplary embodiment.
Fig. 5 is a schematic diagram illustrating an interface display according to an exemplary embodiment.
Fig. 6 is a schematic diagram illustrating an interface display according to an exemplary embodiment.
Fig. 7 is a flow chart illustrating a method for managing control relationships between an account and a device according to an exemplary embodiment.
Fig. 8 is a block diagram illustrating a server according to an exemplary embodiment.
Fig. 9 is a block diagram illustrating a terminal according to an exemplary embodiment.
Fig. 10 is a block diagram illustrating a server according to an exemplary embodiment.
Fig. 11 is a block diagram illustrating a terminal according to an exemplary embodiment.

Specific embodiments of the present disclosure are shown by the above drawings, and more detailed description will be made hereinafter. These drawings and text description are not for limiting the scope of the present disclosure concept in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

### Embodiment I

The embodiment of the present disclosure provides a method for managing control relationships between an account and a device. The method is implemented by a server, a target device, a first terminal and a second terminal participating in this method.

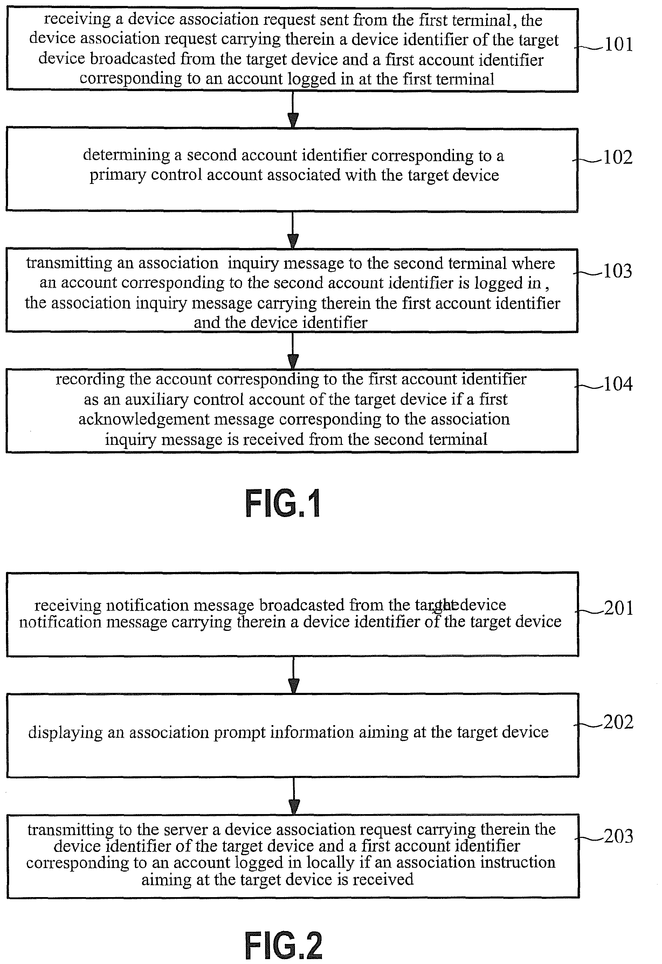

As shown in Fig. 1, a process flow of the server in the method may include following steps.

In step 101, receiving a device association request sent from a first terminal, the device association request comprising a device identifier of a target device broadcasted by the target device and a first account identifier corresponding to an account logged in at the first terminal.

In step 102, determining a second account identifier corresponding to a primary control account associated with the target device.

In step 103, transmitting an association inquiry message to a second terminal at which an account corresponding to the second account identifier is logged in, the association inquiry message comprising the first account identifier and the device identifier.

In step 104, recording the account corresponding to the first account identifier as an auxiliary control account of the target device if a first acknowledgement message corresponding to the association inquiry message is received from the second terminal.

Alternatively, the device association request may further comprise at least one of a plurality of control rights over the target device. Alternatively, the association inquiry message may further comprise the at least one of a plurality of control rights over the target device.

As shown in Fig. 2, a process flow of the first terminal in the method may include following steps.

In step 201, receiving a notification message broadcasted from the target device, the notification message comprising a device identifier of the target device.

In step 202, displaying association prompt information related to the target device.

In step 203, transmitting to the server a device association request comprising the device identifier of the target device and a first account identifier corresponding to an account locally logged in at the first terminal if an association instruction related to the target device is received.

In the embodiment of the present disclosure, the device association request, comprising the device identifier of the target device broadcasted by the target device and the first account identifier corresponding to the account logged in at the first terminal, is received from the first terminal; the second account identifier corresponding to the primary control account associated with the target device is determined; the association inquiry message, comprising the first account identifier and the device identifier, is transmitted to the second terminal at which the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations to frequently release a control relationship between the target device and an account currently associated therewith if it needs to control the target device by a plurality of accounts. Thus, efficiency of establishing the control relationships between the device and accounts can be improved.

### Embodiment II

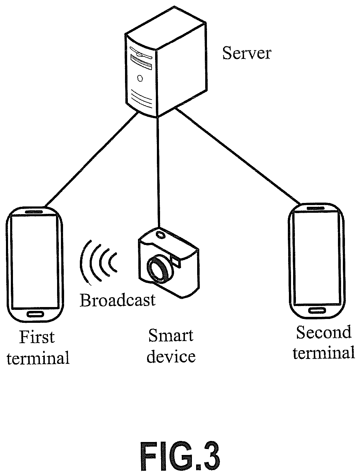

The embodiment of the present disclosure provides a method for managing control relationships between an account and a device. The method may be implemented by a server, a target device, a first terminal and a second terminal participating in this method. A block diagram of a corresponding system comprising these elements is illustrated in Fig. 3. Herein, the first or second terminal may be any terminal connected to a network, for example, a mobile terminal such as a mobile phone, a tablet computer or the like, with an application program installed thereon for device management and control. The server may be a management server in charge of the target device, and may also serve as a backend server of the application program. The target device may be a smart device such as a smart air conditioner, a smart air purifier, a smart switch or the like. Accordingly, the server may serve as a management server for one or more kinds of smart devices. In the embodiment, solutions are described in detail through an example in which the first and second terminals are mobile phones and the target device is a smart device. Implementations are similarly applied to other examples and will not be elaborated herein.

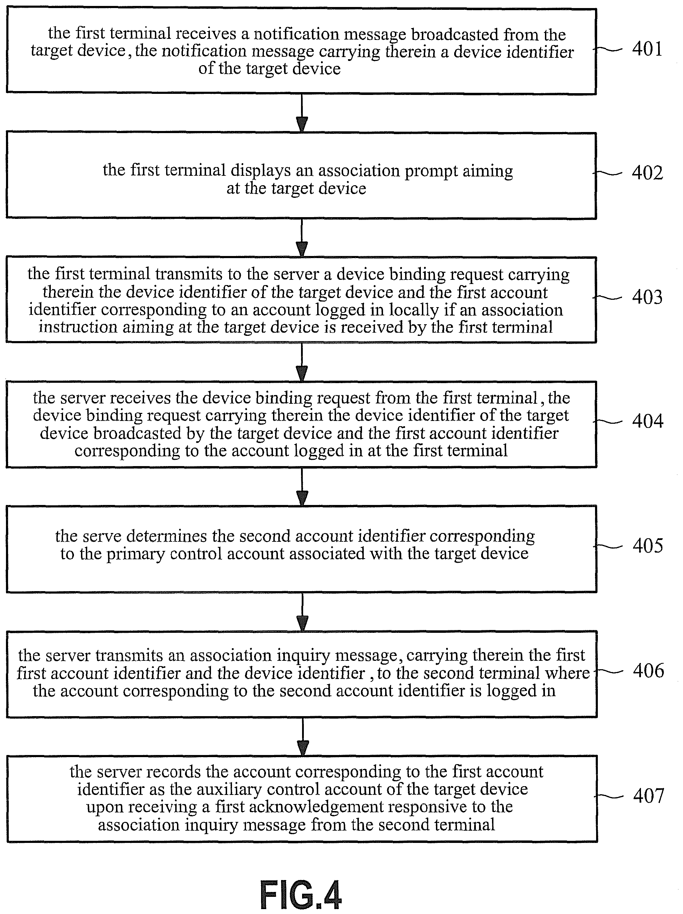

As shown in Fig. 4, a process flow of the method may include following steps.

In step 401, the first terminal receives a notification message broadcasted from the target device, the notification message comprising a device identifier of the target device.

Herein, the first terminal may be a terminal at which an account other than a primary control account associated with the target device is logged in, or may be a terminal operated by a visitor wishes to control the target device. The device identifier may be a MAC (Media Access Control) address, or may also be a unique device number assigned by the application program installed on the first terminal for device management and control.

In an embodiment, an owner of the target device may register his/her account (i.e. an account corresponding to the second account identifier, herein named as the second account) by installing the application program on his/her terminal (i.e. herein called the second terminal), and perform association between the second account and the target device via the application program installed on the second terminal for device management and control, so that an association relationship between a device identifier of the target device and the second account identifier may be stored in the server and the second account may be recorded as a primary control account of the target device by the server. When another user (possibly a family member or a friend of the owner) wants to control the target device via his/her terminal (i.e. herein called the first terminal), he/she may also install the application program on his/her terminal and register his/her own account (i.e. an account corresponding to the first account identifier, herein named as the first account). The account identifier of this account may be an account registered in the application program installed on the first terminal for device management and control.

The target device may be configured in advance to broadcast notification messages in responding to a certain designated operation on a user interface (ex. a button). The notification message is used to enable the target device to become detectable by those terminals having the application program installed thereon, and may comprise the device identifier of the target device. For example, the target device may be configured to broadcast the notification messages in responding to a long press on a certain function button of the target device. Moreover, these notification messages may further comprise the second account identifier corresponding to the primary control account associated with the target device, and may further comprise a device type of the target device. The notification message may be in the form of a beacon message.

In step 402, the first terminal displays an association prompt related to the target device.

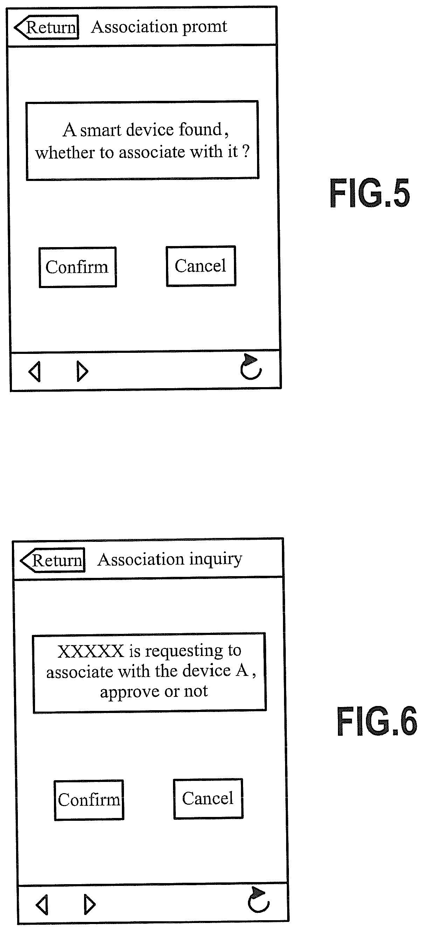

In an embodiment, upon the first terminal receiving the notification message broadcasted by the target device, the application program installed on the first terminal may be triggered to pop up corresponding association prompt information. As shown in Fig. 5, the prompt information related to the target device, for example, "a smart device found, whether to associate with it", is displayed in the association prompt to ask the user whether to perform association with the smart device. A confirm key and a cancel key are further displayed in the association prompt so that the user may be enabled to instruct whether to request an association with the target device in response to the association prompt.

Alternatively, for facilitating a user to select a desirable device to be associated with, a device type of the target device may be also included in the association prompt information of the first terminal. Accordingly, the notification message broadcasted by the target device may further include the device type of the target device. Furthermore, the process flow of step 402 may include displaying the association prompt including the device type of the target device.

In step 403, the first terminal transmits to the server a device association request comprising the device identifier of the target device and the first account identifier corresponding to an account locally logged in at the first terminal if an association instruction related to the target device is received by the first terminal.

In an embodiment, if the confirm key is selected in the association prompt interface by the user, the first terminal may receive the association instruction for associating the account corresponding to the first account identifier with the target device. Thereby, the first terminal may be triggered to generate the device association request comprising the device identifier of the target device and the first account identifier corresponding to the account (i.e. the first account) logged in locally at the first terminal, and then transmit the device association request to the server according to a server address prestored in the application program.

Alternatively, for a case in which the notification message broadcasted by the target device further comprises the second account identifier corresponding to the primary control account associated with the target device, and the device association request may further comprise the second account identifier. Alternatively, the device association request may further comprise at least one of a plurality of control rights over the target device.

In step 404, the server receives the device association request from the first terminal, the device association request comprising the device identifier of the target device broadcasted by the target device and the first account identifier corresponding to the account logged in at the first terminal.

In an embodiment, after the device association request is transmitted from the first terminal to the server, it may be received by the server consequently. Furthermore, the server may parse the device association request to acquire the device identifier of the target device and the first account identifier comprised therein.

In step 405, the server determines the second account identifier corresponding to the primary control account associated with the target device.

In an embodiment, the server may further determine an account identifier (i.e. the second account identifier) corresponding to the primary control account associated with the target device upon receiving the device association request from the first terminal.

Alternatively, for a case in which the second account identifier corresponding to the primary control account associated with the target device is included in the device association request, the step 405 may be implemented as acquiring the second account identifier included in the device association request.

In an embodiment, if the second account identifier corresponding to the primary control account associated with the target device is also included in the device association request received by the server, the server may parse the device association request to acquire the second account identifier included therein. The second account identifier is an account identifier corresponding to the primary control account associated with the target device. Accordingly, the account identifier corresponding to the primary control account associated with the target device may be determined directly by the server.

Alternatively, for another case in which the second account identifier corresponding to the primary control account associated with the target device was already stored in the server and the device identifier of the target device is included in the device association request, the step 405 may be implemented as acquiring the second account identifier corresponding to the primary control account of the target device prestored locally.

In an embodiment, attribute information may be stored by the server for each smart device managed by the server, and the attribute information may include an account identifier of the primary control account corresponding to the smart device. After the device association request is received from the first terminal, the server may parse the device association request to acquire the device identifier of the target device included in the device association request, then retrieve the attribute information of the target device according to the device identifier, and acquire from the retrieved attribute information the account identifier (i.e. the second account identifier) corresponding to the primary control account.

In step 406, the server transmits an association inquiry message, comprising the first account identifier and the device identifier, to the second terminal at which the account corresponding to the second account identifier is logged in.

Herein, the association inquiry message may be a message used for inquiring the terminal, at which the primary control account of the target device is logged in, about whether an auxiliary control account is allowed to be associated.

In an embodiment, after determining the second account identifier corresponding to the primary control account associated with the target device, and the server may further determine a terminal (i.e. the second terminal) at which the primary control account is logged in, generate the association inquiry message comprising the second account identifier and the device identifier of the target device, and transmit the association inquiry message to the second terminal. The association inquiry message may further comprise information such as a nickname of the first account. Alternatively, the association inquiry message may also comprise at least one of a plurality of control rights over the target device.

In step 407, the server records the account corresponding to the first account identifier as the auxiliary control account of the target device upon receiving from the second terminal a first acknowledgement in response to the association inquiry message.

In an embodiment, after the association inquiry message is transmitted from the server to the second terminal, it may be received by the second terminal consequently. Accordingly, the application program installed on the second terminal may be triggered to acquire the device identifier in the association inquiry message, acquire the device type corresponding to the device identifier and stored locally in the second terminal, and generate association inquiry information. As shown in Fig. 6, inquiry information including the first account identifier and the device type of the target device, for example, "XXXXX is requesting to associate with the device A, approve or not", is displayed on an association inquiry interface, to inform the user of the second terminal (i.e. the owner of the target device) that the target device (i.e. the device A) is requested to be associated with a terminal (i.e. the first terminal) of another user (i.e. XXXXX). A confirm key and a cancel key may be also displayed on the association inquiry interface, so that the user may instruct whether to approve an association between the first account identifier and the target device according to the inquiry information. If the confirm key on the association inquiry interface is clicked by the user of the second terminal, the second terminal may be triggered to transmit to the server an acknowledgement message in response to the association inquiry message. Upon receiving the acknowledgement message, the server may record the first account identifier in an item of auxiliary control accounts included in the attribute information of the target device.

For a case in which the association between the first terminal and the target device succeeds, an association success notification message in response to the device association request may be transmitted to the first terminal upon receiving the first acknowledgement message in response to the association inquiry message from the second terminal. For a case in which the association between the first terminal and the target device fails, an association failure notification message in response to the device association request may be transmitted to the first terminal if the first acknowledgement message is not received from the second terminal in a preset time period after transmission of the association inquiry message from the server or if a second acknowledgement message (i.e. a message indicating that the association between the first terminal and the target device is not approved) in response to the association inquiry message is received from the second terminal. Accordingly, the association success notification message or the association failure notification message in response to the device association request may be received by the terminal from the server.

Alternatively, the target device may be controlled via a plurality of control rights and the user of the second terminal may select a control right to be granted to the user of the first terminal among the plurality of control rights. Accordingly, the acknowledgement message may carry therein at least one control right among the plurality of control rights over the target device. Furthermore, the server may process as follows: recording the at least one control right for the account corresponding to the first account identifier.

Alternatively, the target device may be controlled via a plurality of control rights, and the user of the first terminal may select a control right to be granted by the second terminal among the plurality of administrative rights. Accordingly, at least one control right among the plurality of control rights over the target device may be further carried in the device association request, and then may be further carried in the association inquiry message. In this way, the user of the second terminal may decide whether to grant the at least one control right to the user of the first terminal according to information on control rights carried in the association inquiry message.

In an embodiment, when the server transmits the association inquiry message comprising the target device identifier to the second terminal, the association inquiry information generated by the second terminal may be displayed, in the form of options of all the control rights over the target device. Accordingly, the user of the second terminal may select from the options one or more control rights to be granted to the first terminal before clicking the confirm key according to the association inquiry information. Thus, the second terminal may be triggered to transmit to the server an acknowledgement message carrying therein the control rights selected by the user. Upon receiving the acknowledgement message, the server may record the control rights carried in the acknowledgement message into an item of control rights corresponding to the first account identifier included in the attribute information of the target device. For example, control rights over a smart camera may include right of viewing images shoot by the smart camera (referred as "view permission") and a right of configuring photographic parameters of the smart camera (referred as "configure permission"). Only if the right "view permission" is intended to be shared with other users, an option of this right may be selected by a user before clicking the confirm key.

Thereafter, the server may transmit to the first terminal an association success notification comprising the at least one control right in the acknowledgement message.

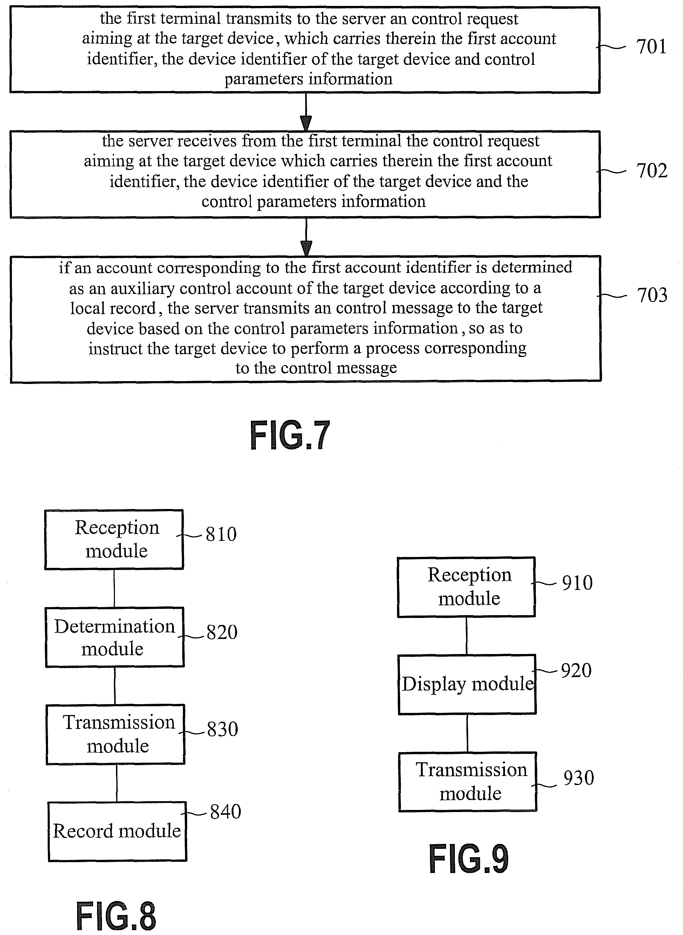

In an embodiment of the present disclosure, there is further provided a method for an auxiliary control account to control a target device based on the association process for the auxiliary control account described above. As shown in Fig. 7, a corresponding process flow may include following steps.

In step 701, the first terminal transmits to the server a control request aiming at the target device, which comprises the first account identifier, the device identifier of the target device and control parameters information.

Herein, the control parameters information may include information for instructing the target device to perform a certain operation (e.g. power on, power off, and the like), and may include information such as an operation identifier and the like.

In an embodiment, a device selection page may be provided in the application program installed in the first terminal. After the first account is recorded as the auxiliary control account of the target device, an option of the target device as well as the device type of the target device may be displayed on the device selection page. If the user intends to perform a certain control on the target device, he/she may click the option of the target device. Thereby, an operation window may be generated by the application program, and may be displayed with operation options related to the target device, such as power on, power off and the like. Accordingly, the user may select an operation to be performed by the target device via the window. Upon selecting the option of the target device, the first terminal may generate a corresponding control request carrying therein the first account identifier, the device identifier of the target device, and an operation identifier of the operation selected by the user (i.e. the control parameters information), and transmit the control request aiming at the target device to the server.

For a case described above in which the user of the second terminal may select at least one control right to be granted to the first terminal among a plurality of control rights, the operation window described above may be further displayed with an option corresponding to the at least one control right carried in the association success notification.

In step 702, the server receives from the first terminal the control request aiming at the target device which carries therein the first account identifier, the device identifier of the target device and the control parameters information.

In an embodiment, upon receiving the control request sent from the first terminal, the server may parse the control request and acquire the first account identifier, the device identifier of the target device and the control parameters information carried therein.

In step 703, if an account corresponding to the first account identifier is determined as an auxiliary control account of the target device according to a local record, the server transmits a control message to the target device based on the control parameters information, so as to instruct the target device to perform a process corresponding to the control message.

In an embodiment, upon acquiring the first account identifier and the device identifier carried in the control request, the server retrieves attribute information of the target device according to the device identifier and determines whether the account corresponding to the first account identifier is the auxiliary control account of the target device based on the attribute information. If the account is determined as the auxiliary control account, the server generates a corresponding control message according to the control parameters information and transmits the control message to the target device. Upon receiving the control message sent from the server, the target device performs the process corresponding to the control message.

In the embodiment of the present disclosure, the device association request, carrying therein the device identifier of the target device broadcasted from the target device and the first account identifier corresponding to the account logged in at the first terminal, is received from the first terminal; the second account identifier corresponding to the primary control account associated with the target device is determined; the association inquiry message, carrying therein the first account identifier and the device identifier, is transmitted to the second terminal at which the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations for frequently releasing a control relationship between the target device and an account currently associated therewith if it needs control the target device by a plurality of accounts. Thus, efficiency of establishing the control relationships between the device and accounts can be improved.

### Embodiment III

Based on a same technical conception, there is provided a server in the embodiments of the disclosure. As shown in Fig. 8, the server includes:
a reception module 810 configured to receive a device association request sent from a first terminal, the device association request carrying therein a device identifier of a target device broadcasted from the target device and a first account identifier corresponding to an account logged in at the first terminal;
a determination module 820 configured to determine a second account identifier corresponding to a primary control account associated with the target device;
a transmission module 830 configured to transmit an association inquiry message to a second terminal at which an account corresponding to the second account identifier is logged in, the association inquiry message carrying the first account identifier and the device identifier; and
a record module 840 configured to record the account corresponding to the first account identifier as an auxiliary control account of the target device if a first acknowledgement message corresponding to the association inquiry message is received from the second terminal.

Alternatively, the transmission module is further configured to transmit to the first terminal an association success notification message in response to the device association request if the first acknowledgement message corresponding to the association inquiry message is received from the second terminal; or transmit to the first terminal an association failure notification message in response to the device association request if the first acknowledgement message is not received from the second terminal in a preset time period after transmission of the association inquiry message or if a second acknowledgement message in response to the association inquiry message is received from the second terminal.

Alternatively, the device association request further carries therein at least one of a plurality of control rights over the target device; and the association inquiry message further carries therein the at least one of a plurality of control rights over the target device.

Alternatively, the reception module 810 is further configured to receive a control request aiming at the target device sent from the first terminal, the control request carrying the first account identifier, the device identifier of the target device and control parameters information.

The transmission module 830 is further configured to transmit an control message to the target device according to the control parameters information, if the account corresponding to the first account identifier is determined as the auxiliary control account of the target device based on a local record, to enable the target device to perform a process corresponding to the control message.

Alternatively, the first acknowledgement message carries therein at least one control right among a plurality of control rights over the target device, and
the record module 840 is further configured to record a control right over the target device for the account corresponding to the first account identifier as including the at least one control right.

Alternatively, the device association request further carries therein the second account identifier corresponding to the primary control account associated with the target device; and
the determination module 820 is configured to acquire the second account identifier carried in the device association request.

Alternatively, the determination module 820 is configured to acquire the second account identifier locally prestored corresponding to a primary control account associated with the target device.

Based on a same technical conception, there is provided a terminal in the embodiments of the disclosure. As shown in Fig. 9, the terminal includes:
a reception module 910 configured to receive notification message broadcasted from a target device, the notification message carrying therein a device identifier of the target device;
a display module 920 configured to display association prompt information related to the target device; and
a transmission module 930 configured to transmit to a server a device association request carrying therein the device identifier of the target device and a first account identifier corresponding to an account logged in locally if an association instruction aiming at the target device is received.

Alternatively, the reception module is further configured to receive an association success message or an association failure message sent from the server in response to the device association request.

Alternatively, the device association request further carries therein at least one of a plurality of control rights over the target device.

Alternatively, the transmission module 930 is further configured to transmit to the server a control request aiming at the target device, the control request carrying therein the first account identifier, the device identifier of the target device and control parameters information.

Alternatively, the notification message further carries therein a device type of the target device; and
the display module 920 is configured to display the association prompt information including the device type of the target device.

Alternatively, the notification message further carries therein a second account identifier corresponding to a primary control account associated with the target device; and the device association request further carries therein the second account identifier.

In the embodiment of the present disclosure, the device association request, carrying therein the device identifier of the target device broadcasted from the target device and the first account identifier corresponding to the account logged in at the first terminal, is received from the first terminal; the second account identifier corresponding to the primary control account associated with the target device is determined; the association inquiry message, carrying therein the first account identifier and the device identifier, is transmitted to the second terminal at which the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations of association and release association frequently even if there is demand for controlling the target device by a plurality of accounts. Thus, efficiency of establishing the control relationships between the device and accounts can be improved.

### Embodiment IV

Based on a same technical conception, there is provided system for managing control relationships between an account and a device. The system includes a server, a first terminal and a second terminal.

Herein, the first terminal is configure to receive a notification message broadcasted from a target device, the notification message carrying therein a device identifier of the target device, display an association prompt aiming at the target device, and transmit to the server a device association request carrying therein the target identifier of the target device and a first account identifier corresponding to an account logged in locally.

The server is configured to receive the device association request transmitted by the first terminal, determine a second account identifier corresponding to a primary control account associated with the target device, transmit an association inquiry message to the second terminal where an account corresponding to the second account identifier is logged in, the association inquiry message carrying therein the first account identifier and the device identifier, and record the account corresponding to the first account identifier as an auxiliary control account of the target device if a first acknowledgement message corresponding to the association inquiry message is received from the second terminal.

In the embodiment of the present disclosure, the device association request, carrying therein the device identifier of the target device broadcasted from the target device and the first account identifier corresponding to the account logged in at the first terminal, is received from the first terminal; the second account identifier corresponding to the primary control account associated with the target device is determined; the association inquiry message, carrying therein the first account identifier and the device identifier, is transmitted to the second terminal where the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations of association and release association frequently even if there is demand for controlling the target device by a plurality of accounts. Thus, efficiency of establishing the control relationships between the device and accounts can be improved.

### Embodiment V

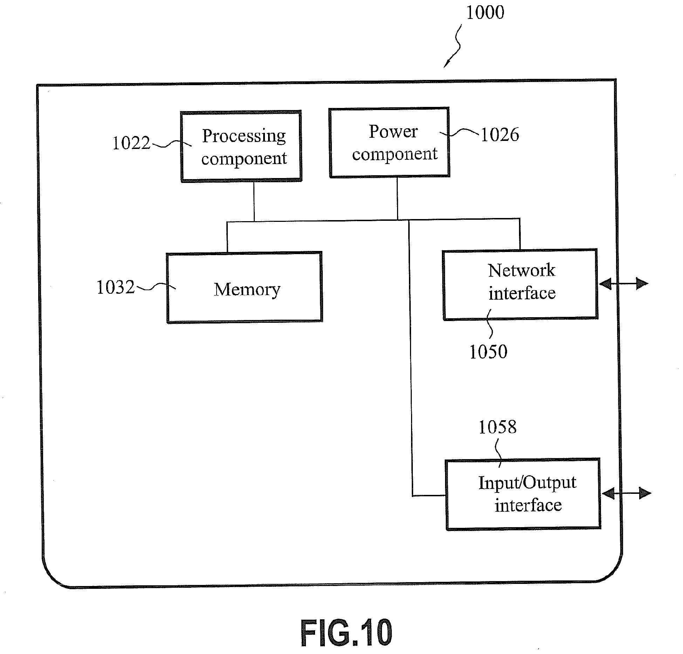

Fig. 10 is a block diagram illustrating an apparatus 1000 for managing control relationships between an account and a device according to an exemplary embodiment. For example, the apparatus 1000 may be provided as a server. As shown in Fig. 10, the apparatus 1000 includes: a processing component 1022 which may further include one or more processors, and memory resource represented by a memory 1032 which is configured to store instructions, such as application programs, executable by the processing component 1022. The application programs stored in the memory 1032 may include one or more modules each corresponding to a set of instructions. Furthermore, the processing component 1022 is configured to execute the instructions so as to perform the method described above.

The apparatus 1000 may also include a power component 1026 configured to perform power management of the apparatus 1000, a wired or wireless network interface 1050 configured to connect the apparatus 1000 with a network, and an Input/Output (I/O) interface 1058. Then apparatus 1000 may be operated based on an operating system stored on the memory 1032, such as Windows ServerTM, Mac OS XTM, UnixTM, LinuxTM, FreeBSDTM or the like.

The apparatus 1000 may include: a memory, and one or more programs stored in the memory and configured to be executable by one or more processors. The programs include instructions for performing following operations:
receiving a device association request sent from a first terminal, the device association request carrying a device identifier of a target device broadcasted from the target device and a first account identifier corresponding to an account logged in at the first terminal;
determining a second account identifier corresponding to a primary control account associated with the target device;
transmitting an association inquiry message to a second terminal where an account corresponding to the second account identifier is logged in, the association inquiry message carrying the first account identifier and the device identifier; and
recording the account corresponding to the first account identifier as an auxiliary control account of the target device if a first acknowledgement message corresponding to the association inquiry message is received from the second terminal.

Alternatively, the method further includes:
transmitting to the first terminal an association success notification message responsive to the device association request if the first acknowledgement message corresponding to the association inquiry message is received from the second terminal; and/or transmitting to the first terminal an association failure notification message in response to the device association request if the first acknowledgement message is not received from the second terminal in a preset time period after transmission of the association inquiry message or if a second acknowledgement message in response to the association inquiry message is received from the second terminal.

Alternatively, the device association request further carries at least one of a plurality of control rights over the target device; and the association inquiry message further carries the at least one of a plurality of control rights over the target device.

Alternatively, the method further includes:
receiving an control request aiming at the target device sent from the first terminal, the control request carrying the first account identifier, the device identifier of the target device and control parameters information; and
transmitting an control message to the target device according to the control parameters information, if the account corresponding to the first account identifier is determined as the auxiliary control account of the target device based on a local record, to enable the target device to perform a process corresponding to the control message.

Alternatively, the first acknowledgement message carries at least one control right among a plurality of control rights over the target device,
the method further includes:
recording an control right of the account corresponding to the first account identifier over the target device as comprising the at least one control right.

Alternatively, the device association request further carries the second account identifier corresponding to the primary control account associated with the target device; and
the determining a second account identifier corresponding to a primary control account associated with the target device includes: acquiring the second account identifier carried in the device association request.

Alternatively, the determining a second account identifier corresponding to a primary control account associated with the target device includes:
acquiring the second account identifier locally prestored corresponding to a primary control account associated with the target device.

In the embodiment of the present disclosure, the device association request, carrying therein the device identifier of the target device broadcasted from the target device and the first account identifier corresponding to the account logged in at the first terminal, is received from the first terminal; the second account identifier corresponding to the primary control account associated with the target device is determined; the association inquiry message, carrying therein the first account identifier and the device identifier, is transmitted to the second terminal where the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations of association and release association frequently even if there is demand for controlling the target device by a plurality of accounts. Thus, efficiency of establishing the control relationships between the device and accounts can be improved.

### Embodiment VI

There is also provided a terminal according to an exemplary embodiment of the present disclosure. The terminal may be a mobile phone.

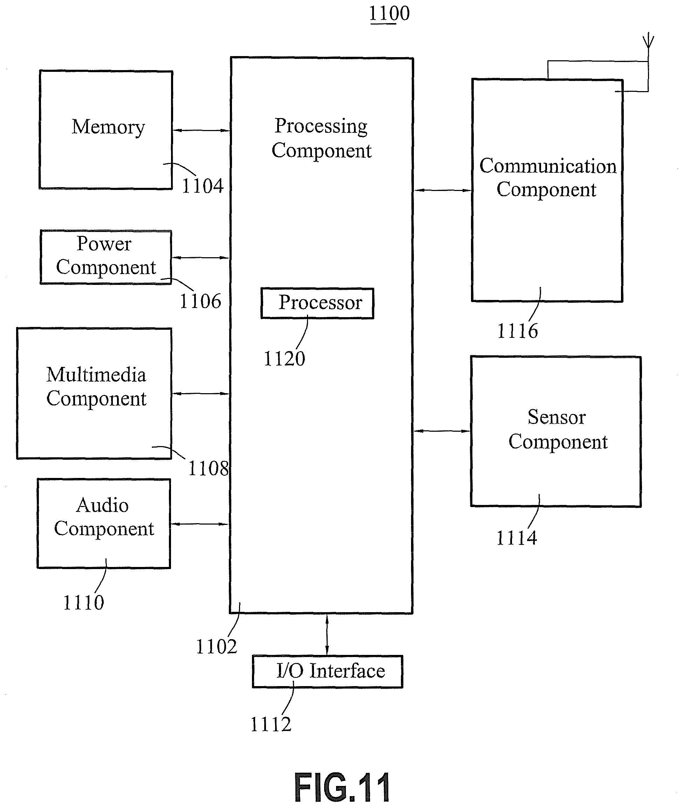

As shown in Fig. 11, the terminal 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 generally controls overall operations of the terminal 1100, such as operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate interaction between the processing component 1102 and other components. For instance, the processing component 1102 may include a multimedia module to facilitate the interaction between the multimedia component 1108 and the processing component 1102.

The memory 1104 is configured to store various types of data to support the operation of the terminal 1100. Examples of such data include instructions for any application or method operated on the terminal 1100, contact data, phonebook data, messages, pictures, videos, etc. The memory 1104 may be implemented using any type of volatile or non-volatile memory apparatus or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 1106 provides power to various components of the terminal 1100. The power component 1106 may include a power management system, one or more power sources, and other components associated with the generation, management, and distribution of power in the terminal 1100.

The multimedia component 1108 includes a screen providing an output interface between the terminal 1100 and the user. In some embodiments, the screen may include a liquid crystal display (LCD) and a touch panel (TP). If the screen includes the touch panel, the screen may be implemented as a touch screen to receive input signal from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1108 includes a front camera and/or a rear camera. The front camera and/or the rear camera may receive an external multimedia datum while the terminal 1100 is in an operation mode, such as a photographing mode or a video mode. Each of the front camera and the rear camera may be a fixed optical lens system or have focus and optical zoom capability.

The audio component 1110 is configured to output and/or input audio signal. For example, the audio component 1110 includes a microphone (MIC) configured to receive external audio signal when the terminal 1100 is in an operation mode, such as a call mode, a recording mode, and a voice identification mode. The received audio signal may be further stored in the memory 1104 or transmitted via the communication component 1116.

The I/O interface 1112 provides an interface between the processing component 1102 and peripheral interface modules, such as a keyboard, a click wheel, a button, or the like. The button may include, but not limited to, a home button, a volume button, a starting button, or a locking button.

The sensor component 1114 includes one or more sensors to provide status assessments of various aspects of the terminal 1100. For instance, the sensor component 1114 may detect an open/closed status of the terminal 1100, relative positioning of components, e.g., the display and the keyboard, of the terminal 1100, a change in position of the terminal 1100 or a component of the terminal 1100, a presence or absence of user contact with the terminal 1100, an orientation or an acceleration/deceleration of the terminal 1100, and a change in temperature of the terminal 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the terminal 1100 and other apparatuses. The terminal 1100 may access a wireless network based on a communication standard, such as WIFI, 2G, or 3G, or a combination thereof. In one exemplary embodiment, the communication component 1116 receives broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1100 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as instructions included in the memory 1104, executable by the processor 1120 in the terminal 1100, for performing the above method. For example, the non-transitory computer-readable storage medium may be a ROM, a random access memory (RAM), a CD-ROM, a magnetic tape, a floppy disc, an optical data storage apparatus, or the like.

A non-transitory computer-readable storage medium includes instructions, executable by a processor of the terminal, to enable the terminal to perform a method for managing control relationships between an account and a device. The method includes:
receiving notification message broadcasted from a target device, the notification message carrying a device identifier of the target device;
displaying association prompt information aiming at the target device; and
transmitting to a server a device association request carrying the device identifier of the target device and a first account identifier corresponding to an account logged in locally if an association instruction aiming at the target device is received.

Alternatively, the method further includes:
receiving a successful association message or a failed association message sent from the server in response to the device association request.

Alternatively, the device association request further carries at least one of a plurality of control rights over the target device.

Alternatively, the method further includes:
transmitting to the server an control request aiming at the target device, the control request carrying the first account identifier, the device identifier of the target device and control parameters information.

Alternatively, the notification message further carries a device type of the target device; and
displaying the association prompt information aiming at the target device includes: displaying the association prompt information comprising the device type of the target device.

Alternatively, the notification message further carries a second account identifier corresponding to a primary control account associated with the target device; and the device association request further carries the second account identifier.

In the embodiment of the present disclosure, the device association request, carrying therein the device identifier of the target device broadcasted from the target device and the first account identifier corresponding to the account logged in at the first terminal, is received from the first terminal; the second account identifier corresponding to the primary control account associated with the target device is determined; the association inquiry message, carrying therein the first account identifier and the device identifier, is transmitted to the second terminal where the account corresponding to the second account identifier is logged in; and then the account corresponding to the first account identifier is recorded as the auxiliary control account of the target device if the first acknowledgement message corresponding to the association inquiry message is received from the second terminal. In this way, additional accounts other than the primary control account of the target device may serve as auxiliary control accounts of the target device. Accordingly, it is unnecessary to perform operations of association and release association frequently even if there is demand for controlling the target device by a plurality of accounts. Thus, efficiency of establishing the control relationships between the device and accounts can be improved.

## Claims

1. A method for managing control relationships between an account and a device, the method being implemented by a server and comprising:
receiving (101) a device association request sent from a first terminal, the device association request carrying a device identifier of a target device broadcasted from the target device and a first account identifier corresponding to an account logged in at the first terminal;
determining (102) a second account identifier corresponding to a primary control account associated with the target device; and
transmitting (103) an association inquiry message to a second terminal where an account corresponding to the second account identifier is logged in, the association inquiry message carrying the first account identifier;
**characterized in that**, the association inquiry message further carries the device identifier, and the method further comprises:
recording (104) the account corresponding to the first account identifier as an auxiliary control account of the target device if a first acknowledgement message corresponding to the association inquiry message is received from the second terminal, wherein the first acknowledgement message carries one or more control rights granted to the first terminal and selected by a user of the second terminal from options of all control rights over the target device before the user clicks a confirm key according to association inquiry information generated by the second terminal and displayed in a form of the options when the server transmits the association inquiry message to the second terminal.

2. The method according to claim 1, **characterized in that**, the method further comprises:
transmitting to the first terminal an association success notification message in response to the device association request if the first acknowledgement message corresponding to the association inquiry message is received from the second terminal; and
transmitting to the first terminal an association failure notification message in response to the device association request if the first acknowledgement message is not received from the second terminal in a preset time period after transmission of the association inquiry message or if a second acknowledgement message in response to the association inquiry message is received from the second terminal.

3. The method according to claim 1 or 2, **characterized in that**, the device association request further carries at least one control right selected from a plurality of control rights over the target device; and the association inquiry message further carries the at least one control right over the target device.

4. The method according to any one of claims 1 to 3, **characterized in that**, the method further comprises:
receiving a control request aiming at the target device sent from the first terminal, the control request carrying the first account identifier, the device identifier of the target device and control parameters information; and
transmitting a control message to the target device according to the control parameters information, if the account corresponding to the first account identifier is determined as the auxiliary control account of the target device based on a local record, to enable the target device to perform a process corresponding to the control message.

5. The method according to any one of claims 1 to 4, **characterized in that**, the method further comprises:
recording said one or more control rights for the account corresponding to the first account identifier over the target device.

6. The method according to any one of claims 1 to 5, **characterized in that**, the device association request further carries the second account identifier corresponding to the primary control account associated with the target device; and
determining (102) said second account identifier corresponding to said primary control account associated with the target device comprises:
acquiring the second account identifier carried in the device association request.

7. The method according to any one of claims 1 to 5, **characterized in that**, determining (102) said second account identifier corresponding to said primary control account associated with the target device comprises:
acquiring the second account identifier locally prestored corresponding to said primary control account associated with the target device.

8. A method for managing control relationships between an account and a device, the method being implemented by a first terminal and comprising:
receiving (201) a notification message broadcasted from a target device associated with a second account identifier corresponding to a primary control account, the notification message carrying a device identifier of the target device;
displaying (202) association prompt information aiming at the target device;
transmitting (203) to a server a device association request carrying the device identifier of the target device and a first account identifier corresponding to an account logged in locally if an association instruction aiming at the target device is received, so that the first user account may serve as an auxiliary control account of the target device; and
receiving an association success notification message or an association failure notification message sent from the server in response to the device association request;
**characterized in that** the association success notification message comprises one or more control rights granted to the first terminal and selected by a user of a second terminal from options of all control rights over the target device before the user clicks a confirm key according to association inquiry information generated by the second terminal and displayed in a form of the options when the server, after receiving the device association request from the first terminal, transmits an association inquiry message to the second terminal.

9. The method according to claim 8, **characterized in that**, the device association request further carries at least one control right selected from a plurality of control rights over the target device.

10. The method according to claim 8 or 9, **characterized in that**, the method further comprises:
transmitting to the server a control request aiming at the target device, the control request carrying the first account identifier, the device identifier of the target device and control parameters information.

11. The method according to any one of claims 8 to 10, **characterized in that**, the notification message further carries a device type of the target device; and
displaying (202) said association prompt information aiming at the target device comprises:
displaying the association prompt information comprising the device type of the target device.

12. The method according to any one of claims 8 to 11, **characterized in that**, the notification message further carries said second account identifier corresponding to said primary control account associated with the target device; and the device association request further carries the second account identifier.

13. A server (1000) for managing control relationships between an account and a device, comprising:
a processor; and
a memory (1032) for storing instructions executable by the processor,
the processor being configured to:
receive a device association request sent from a first terminal, the device association request carrying a device identifier of a target device broadcasted from the target device and a first account identifier corresponding to an account logged in at the first terminal;
determine a second account identifier corresponding to a primary control account associated with the target device; and
transmit an association inquiry message to a second terminal where an account corresponding to the second account identifier is logged in, the association inquiry message carrying the first account identifier;
**characterized in that**, the association inquiry message further carries the device identifier and the processor is further configured to:
record the account corresponding to the first account identifier as an auxiliary control account of the target device if a first acknowledgement message corresponding to the association inquiry message is received from the second terminal, wherein the first acknowledgement message carries one or more control rights granted to the first terminal and selected by a user of the second terminal from options of all control rights over the target device before the user clicks a confirm key according to association inquiry information generated by the second terminal and displayed in a form of the options when the server transmits the association inquiry message to the second terminal.

14. A first terminal (1100) for managing control relationships between an account and a device, comprising:
a processor (1120); and
a memory (1104) for storing instructions executable by the processor (1120),
the processor (1120) being configured to:
receive a notification message broadcasted from a target device associated with a second account identifier corresponding to a primary control account, the notification message carrying a device identifier of the target device;
display an association prompt aiming at the target device;
transmit to a server a device association request carrying the device identifier of the target device and a first account identifier corresponding to an account logged in locally if an association instruction aiming at the target device is received, so that the first user account may serve as an auxiliary control account of the target device; and
receive an association success notification message or an association failure notification message sent from the server in response to the device association request;
**characterized in that**, the association success notification message comprises one or more control rights granted to the first terminal and selected by a user of a second terminal from options of all control rights over the target device before the user clicks a confirm key according to association inquiry information generated by the second terminal and displayed in a form of the options when the server, after receiving the device association request from the first terminal, transmits an association inquiry message to the second terminal.

15. A computer program comprising instructions, wherein when the instructions are executed by a processor of a server, the processor executes the method according to any one of claims 1 to 7.

16. A computer program comprising instructions, wherein when the instructions are executed by a processor of a terminal, the processor executes the method according to any one of claims 8 to 12.

17. A recordable medium readable by a computer and having recorded thereon the computer program according to claim 15 or 16.

## Patentansprüche

1. Verfahren zum Verwalten von Steuerbeziehungen zwischen einem Konto und einem Gerät, wobei das Verfahren von einem Server implementiert wird und umfasst:
Empfangen (101) einer von einem ersten Terminal gesendeten Gerätezuordnungsanforderung, wobei die Gerätezuordnungsanforderung eine Gerätekennung eines Zielgeräts, die von dem Zielgerät gesendet wurde, und eine erste Kontokennung trägt, die einem am ersten Terminal angemeldeten Konto entspricht,
Bestimmen (102) einer zweiten Kontokennung, die einem primären Steuerkonto entspricht, das mit dem Zielgerät verbunden ist, und
Übertragen (103) einer Zuordnungsanfragenachricht an ein zweites Terminal, an dem ein Konto angemeldet ist, das der zweiten Kontokennung entspricht, wobei die Zuordnungsanfragenachricht die erste Kontokennung trägt,
**dadurch gekennzeichnet, dass** die Zuordnungsanfragenachricht ferner die Gerätekennung trägt und das Verfahren ferner umfasst:
Aufzeichnen (104) des Kontos, das der ersten Kontokennung entspricht, als ein Hilfssteuerkonto des Zielgerätes, wenn eine erste Bestätigungsnachricht, die der Zuordnungsanfragenachricht entspricht, von dem zweiten Terminal empfangen wird, wobei die erste Bestätigungsnachricht ein oder mehrere Steuerrechte trägt, die dem ersten Terminal gewährt werden und von einem Benutzer des zweiten Terminals aus Optionen aller Steuerrechte über das Zielgerät ausgewählt werden, bevor der Benutzer auf eine Bestätigungstaste gemäß Zuordnungsanfrageinformationen klickt, die von dem zweiten Terminal erzeugt und in einer Form der Optionen angezeigt werden, wenn der Server die Zuordnungsanfragenachricht an das zweite Terminal überträgt.

2. Verfahren nach Anspruch 1, **dadurch gekennzeichnet, dass** das Verfahren ferner umfasst:
Übertragen einer Zuordnungserfolgs-Benachrichtigungsnachricht an das erste Terminal als Antwort auf die Gerätezuordnungsanforderung, wenn die erste Bestätigungsnachricht, die der Zuordnungsanfragenachricht entspricht, von dem zweiten Terminal empfangen wird, und
Übertragen einer Zuordnungsfehler-Benachrichtigungsnachricht an das erste Terminal als Antwort auf die Gerätezuordnungsanforderung, wenn die erste Bestätigungsnachricht von dem zweiten Terminal nicht innerhalb einer vorgegebenen Zeitspanne nach der Übertragung der Zuordnungsanfragenachricht empfangen wird oder wenn eine zweite Bestätigungsnachricht als Antwort auf die Zuordnungsanfragenachricht von dem zweiten Terminal empfangen wird.

3. Verfahren nach Anspruch 1 oder 2, **dadurch gekennzeichnet, dass** die Gerätezuordnungsanforderung ferner mindestens ein aus einer Vielzahl von Steuerrechten über das Zielgerät ausgewähltes Steuerrecht trägt und die Zuordnungsanfragenachricht ferner das mindestens eine Steuerrecht über das Zielgerät trägt.

4. Verfahren nach einem der Ansprüche 1 bis 3, **dadurch gekennzeichnet, dass** das Verfahren ferner umfasst:
Empfangen einer Steueranforderung, die auf das Zielgerät abzielt und von dem ersten Endgerät gesendet wurde, wobei die Steueranforderung die erste Kontokennung, die Gerätekennung des Zielgerätes und Steuerparameterinformationen enthält, und
Übertragen einer Steuernachricht an das Zielgerät gemäß den Steuerparameterinformationen, wenn das Konto, das der ersten Kontokennung entspricht, als Hilfssteuerkonto des Zielgeräts auf der Grundlage eines lokalen Datensatzes bestimmt wird, um das Zielgerät in die Lage zu versetzen, einen der Steuernachricht entsprechenden Prozess durchzuführen.

5. Verfahren nach einem der Ansprüche 1 bis 4, **dadurch gekennzeichnet, dass** das Verfahren ferner umfasst:
Aufzeichnen des einen oder der mehreren Steuerrechte(s) über das Zielgerät für das Konto, das der ersten Kontokennung entspricht.

6. Verfahren nach einem der Ansprüche 1 bis 5, **dadurch gekennzeichnet,**
**dass** die Gerätezuordnungsanforderung ferner die zweite Kontokennung trägt, die dem primären Steuerkonto entspricht, das dem Zielgerät zugeordnet ist, und
**dass** das Bestimmen (102) der zweiten Kontokennung, die dem primären Steuerkonto entspricht, das mit dem Zielgerät verbunden ist, umfasst:
Erfassen der zweiten Kontokennung, die in der Gerätezuordnungsanforderung enthalten ist.

7. Verfahren nach einem der Ansprüche 1 bis 5, **dadurch gekennzeichnet, dass** das Bestimmen (102) der zweiten Kontokennung, die dem primären Steuerkonto entspricht, das dem Zielgerät zugeordnet ist, umfasst:
Erfassen der zweiten Kontokennung, die lokal vorgespeichert ist und dem genannten primären Steuerkonto entspricht, das dem Zielgerät zugeordnet ist.

8. Verfahren zum Verwalten von Steuerbeziehungen zwischen einem Konto und einem Gerät, wobei das Verfahren durch ein erstes Terminal implementiert wird und umfasst
Empfangen (201) einer von einem Zielgerät, das mit einer zweiten Kontokennung verknüpft ist, die einem primären Steuerkonto entspricht, gesendeten Benachrichtigungsnachricht, wobei die Benachrichtigungsnachricht eine Gerätekennung des Zielgeräts trägt,
Anzeigen (202) von Zuordnungs-Promptinformationen, die auf das Zielgerät abzielen,
Übertragen (203) einer Gerätezuordnungsanforderung, die die Gerätekennung des Zielgeräts und eine erste Kontokennung trägt, die einem lokal angemeldeten Konto entspricht, an einen Server, wenn ein auf das Zielgerät abzielender Zuordnungsbefehl empfangen wird, so dass das erste Benutzerkonto als Hilfssteuerkonto des Zielgeräts dienen kann, und
Empfangen einer Zuordnungserfolgs-Benachrichtigungsnachricht oder einer Zuordnungsfehler-Benachrichtigungsnachricht, die von dem Server als Antwort auf die Gerätezuordnungsanforderung gesendet wurde,
**dadurch gekennzeichnet, dass** die Zuordnungs-Erfolgsbenachrichtigungsnachricht ein oder mehrere Steuerrechte umfasst, die dem ersten Terminal gewährt werden und von einem Benutzer eines zweiten Terminals aus Optionen aller Steuerrechte über das Zielgerät ausgewählt werden, bevor der Benutzer auf eine Bestätigungstaste klickt, gemäß Zuordnungsanfrageinformationen, die von dem zweiten Terminal erzeugt und in einer Form der Optionen angezeigt werden, wenn der Server nach dem Empfangen der Gerätezuordnungsanforderung von dem ersten Terminal eine Zuordnungsanfragenachricht an das zweite Terminal sendet.

9. Verfahren nach Anspruch 8, **dadurch gekennzeichnet, dass** die Gerätezuordnungsanforderung ferner mindestens ein Steuerrecht trägt, das aus einer Vielzahl von Steuerrechten über das Zielgerät ausgewählt ist.

10. Verfahren nach Anspruch 8 oder 9, **dadurch gekennzeichnet, dass** das Verfahren ferner umfasst:
Übertragen einer auf das Zielgerät abzielenden Steueranforderung an den Server, wobei die Steueranforderung die erste Kontokennung, die Gerätekennung des Zielgeräts und Steuerparameterinformationen enthält.

11. Verfahren nach einem der Ansprüche 8 bis 10, **dadurch gekennzeichnet,**
**dass** die Benachrichtigungsnachricht ferner einen Gerätetyp des Zielgerätes trägt und
**dass** das Anzeigen (202) der Zuordnungs-Promptinformationen, die auf das Zielgerät abzielen, umfasst:
Anzeigen der Zuordnungs-Promptinformationen, die den Gerätetyp des Zielgeräts umfassen.

12. Verfahren nach einem der Ansprüche 8 bis 11, **dadurch gekennzeichnet, dass** die Benachrichtigungsnachricht ferner die zweite Kontokennung trägt, die dem dem Zielgerät zugeordneten primären Steuerkonto entspricht, und dass die Gerätezuordnungsanforderung ferner die zweite Kontokennung trägt.

13. Server (1000) zum Verwalten von Steuerbeziehungen zwischen einem Konto und einem Gerät, umfassend:
einen Prozessor und
einen Speicher (1032) zum Speichern von durch den Prozessor ausführbaren Befehlen,
wobei der Prozessor dazu konfiguriert ist:
eine von einem ersten Terminal gesendete Gerätezuordnungsanforderung zu empfangen, wobei die Gerätezuordnungsanforderung eine Gerätekennung eines Zielgeräts, die von dem Zielgerät gesendet wird, und eine erste Kontokennung trägt, die einem an dem ersten Terminal angemeldeten Konto entspricht,
eine zweite Kontokennung zu bestimmen, die einem primären Steuerkonto entspricht, das mit dem Zielgerät verbunden ist, und
eine Zuordnungsanfragenachricht an ein zweites Terminal zu übertragen, an dem ein Konto angemeldet ist, das der zweiten Kontokennung entspricht, wobei die Zuordnungsanfragenachricht die erste Kontokennung trägt,
**dadurch gekennzeichnet, dass** die Zuordnungsanfragenachricht ferner die Gerätekennung trägt und der Prozessor ferner dazu konfiguriert ist:
das Konto, das der ersten Kontokennung entspricht, als ein Hilfssteuerkonto des Zielgeräts aufzuzeichnen, wenn eine erste Bestätigungsnachricht, die der Zuordnungsanfragenachricht entspricht, von dem zweiten Terminal empfangen wird, wobei die erste Bestätigungsnachricht ein oder mehrere Steuerrechte trägt, die dem ersten Terminal gewährt werden und von einem Benutzer des zweiten Terminals aus Optionen aller Steuerrechte über das Zielgerät ausgewählt werden, bevor der Benutzer auf eine Bestätigungstaste klickt, entsprechend der Zuordnungsanfrageninformation, die von dem zweiten Terminal erzeugt und in einer Form der Optionen angezeigt wird, wenn der Server die Zuordnungsanfragenachricht an das zweite Terminal überträgt.

14. Erstes Terminal (1100) zum Verwalten von Steuerbeziehungen zwischen einem Konto und einem Gerät, umfassend:
einen Prozessor (1120) und
einen Speicher (1104) zum Speichern von durch den Prozessor (1120) ausführbaren Befehlen,
wobei der Prozessor (1120) dazu konfiguriert ist:
eine Benachrichtigungsnachricht zu empfangen, die von einem Zielgerät gesendet wird, dem eine zweite Kontokennung zugeordnet ist, die einem primären Steuerkonto entspricht, wobei die Benachrichtigungsnachricht eine Gerätekennung des Zielgeräts trägt,
eine Zuordnungsanfrage anzuzeigen, die auf das Zielgerät abzielt,
eine Gerätezuordnungsanforderung mit der Gerätekennung des Zielgeräts und einer ersten Kontokennung, die einem lokal angemeldeten Konto entspricht, an einen Server zu übertragen, wenn ein auf das Zielgerät abzielender Zuordnungsbefehl empfangen wird, so dass das erste Benutzerkonto als Hilfssteuerkonto des Zielgeräts dienen kann, und
eine Zuordnungserfolgs-Benachrichtigungsnachricht oder eine Zuordnungsfehler-Benachrichtigungsnachricht zu erhalten, die als Antwort auf die Gerätezuordnungsanforderung von dem Server gesendet wurde,
**dadurch gekennzeichnet, dass** die Zuordnungs-Erfolgsbenachrichtigungsnachricht ein oder mehrere Steuerrechte umfasst, die dem ersten Terminal gewährt werden und von einem Benutzer eines zweiten Terminals aus Optionen aller Steuerrechte über das Zielgerät ausgewählt werden, bevor der Benutzer auf eine Bestätigungstaste klickt, gemäß Zuordnungsanfrageinformationen, die von dem zweiten Terminal erzeugt und in einer Form der Optionen angezeigt werden, wenn der Server nach dem Empfang der Gerätezuordnungsanforderung von dem ersten Terminal eine Zuordnungsanfragenachricht an das zweite Terminal sendet.

15. Computerprogramm mit Befehlen, wobei, wenn die Befehle von einem Prozessor eines Servers ausgeführt werden, der Prozessor das Verfahren gemäß einem der Ansprüche 1 bis 7 ausführt.

16. Computerprogramm mit Befehlen, wobei, wenn die Befehle von einem Prozessor eines Terminals ausgeführt werden, der Prozessor das Verfahren gemäß einem der Ansprüche 8 bis 12 ausführt.

17. Aufzeichnungsmedium, das von einem Computer lesbar ist und auf dem das Computerprogramm nach Anspruch 15 oder 16 aufgezeichnet ist.

## Revendications

1. Procédé pour gérer des relations de contrôle entre un compte et un dispositif, le procédé étant mis en œuvre par un serveur et comprenant :
la réception (101) d'une requête d'association de dispositif envoyée depuis un premier terminal, la requête d'association de dispositif portant un identifiant de dispositif d'un dispositif cible diffusé depuis le dispositif cible et un premier identifiant de compte correspondant à un compte connecté au niveau du premier terminal ;
la détermination (102) d'un second identifiant de compte correspondant à un compte de contrôle primaire associé au dispositif cible ; et
la transmission (103) d'un message de demande d'association à un second terminal où un compte correspondant au second identifiant de compte est connecté, le message de demande d'association portant le premier identifiant de compte ;
**caractérisé en ce que**, le message de demande d'association porte en outre l'identifiant de dispositif, et le procédé comprend en outre :
l'enregistrement (104) du compte correspondant au premier identifiant de compte comme un compte de contrôle auxiliaire du dispositif cible si un premier message d'accusé de réception correspondant au message de demande d'association est reçu du second terminal, dans lequel le premier message d'accusé de réception porte un ou plusieurs droits de contrôle octroyés au premier terminal et sélectionnés par un utilisateur du second terminal parmi des options de tous les droits de contrôle sur le dispositif cible avant que l'utilisateur ne clique sur une touche de confirmation selon une information de demande d'association générée par le second terminal et affichée sous la forme des options lorsque le serveur transmet le message de demande d'association au second terminal.

2. Procédé selon la revendication 1, **caractérisé en ce que**, le procédé comprend en outre :
la transmission au premier terminal d'un message de notification de réussite d'association en réponse à la requête d'association de dispositif si le premier message d'accusé de réception correspondant au message de demande d'association est reçu du second terminal ; et
la transmission au premier terminal d'un message de notification d'échec d'association en réponse à la requête d'association de dispositif si le premier message d'accusé de réception n'est pas reçu du second terminal dans une période de temps prédéfinie après la transmission du message de demande d'association ou si un second message d'accusé de réception en réponse au message de demande d'association est reçu du second terminal.

3. Procédé selon la revendication 1 ou 2, **caractérisé en ce que**, la requête d'association de dispositif porte en outre au moins un droit de contrôle sélectionné parmi une pluralité de droits de contrôle sur le dispositif cible ; et le message de demande d'association porte en outre le au moins un droit de contrôle sur le dispositif cible.

4. Procédé selon l'une quelconque des revendications 1 à 3, **caractérisé en ce que**, le procédé comprend en outre :
la réception d'une requête de contrôle visant le dispositif cible envoyée depuis le premier terminal, la requête de contrôle portant le premier identifiant de compte, l'identifiant de dispositif du dispositif cible et une information de paramètres de contrôle ; et
la transmission d'un message de contrôle au dispositif cible selon l'information de paramètres de contrôle, si le compte correspondant au premier identifiant de compte est déterminé comme le compte de contrôle auxiliaire du dispositif cible sur la base d'un enregistrement local, pour permettre au dispositif cible d'effectuer un processus correspondant au message de contrôle.

5. Procédé selon l'une quelconque des revendications 1 à 4, **caractérisé en ce que**, le procédé comprend en outre :
l'enregistrement desdits un ou plusieurs droits de contrôle pour le compte correspondant au premier identifiant de compte sur le dispositif cible.

6. Procédé selon l'une quelconque des revendications 1 à 5, **caractérisé en ce que**, la requête d'association de dispositif porte en outre le second identifiant de compte correspondant au compte de contrôle primaire associé au dispositif cible ; et
la détermination (102) dudit second identifiant de compte correspondant audit compte de contrôle primaire associé au dispositif cible comprend :
l'acquisition du second identifiant de compte que porte la requête d'association de dispositif.

7. Procédé selon l'une quelconque des revendications 1 à 5, **caractérisé en ce que**, la détermination (102) dudit second identifiant de compte correspondant audit compte de contrôle primaire associé au dispositif cible comprend :
l'acquisition du second identifiant de compte pré-stocké localement correspondant audit compte de contrôle primaire associé au dispositif cible.

8. Procédé pour gérer des relations de contrôle entre un compte et un dispositif, le procédé étant mis en œuvre par un premier terminal et comprenant :
la réception (201) d'un message de notification diffusé depuis un dispositif cible associé à un second identifiant de compte correspondant à un compte de contrôle primaire, le message de notification portant un identifiant de dispositif du dispositif cible ;
l'affichage (202) d'une information d'invite d'association visant le dispositif cible ;
la transmission (203) à un serveur d'une requête d'association de dispositif portant l'identifiant de dispositif du dispositif cible et un premier identifiant de compte correspondant à un compte connecté localement si une instruction d'association visant le dispositif cible est reçue, de sorte que le premier compte d'utilisateur puisse servir de compte de contrôle auxiliaire du dispositif cible ; et
la réception d'un message de notification de réussite d'association ou d'un message de notification d'échec d'association envoyé depuis le serveur en réponse à la requête d'association de dispositif ;
**caractérisé en ce que** le message de notification de réussite d'association comprend un ou plusieurs droits de contrôle octroyés au premier terminal et sélectionnés par un utilisateur d'un second terminal parmi des options de tous les droits de contrôle sur le dispositif cible avant que l'utilisateur ne clique sur une touche de confirmation selon une information de demande d'association générée par le second terminal et affichée sous la forme des options lorsque le serveur, après la réception de la requête d'association de dispositif en provenance du premier terminal, transmet un message de demande d'association au second terminal.

9. Procédé selon la revendication 8, **caractérisé en ce que**, la requête d'association de dispositif porte en outre au moins un droit de contrôle sélectionné parmi une pluralité de droits de contrôle sur le dispositif cible.

10. Procédé selon la revendication 8 ou 9, **caractérisé en ce que**, le procédé comprend en outre :
la transmission au serveur d'une requête de contrôle visant le dispositif cible, la requête de contrôle portant le premier identifiant de compte, l'identifiant de dispositif du dispositif cible et une information de paramètres de contrôle.

11. Procédé selon l'une quelconque des revendications 8 à 10, **caractérisé en ce que**, le message de notification porte en outre un type de dispositif du dispositif cible ; et
l'affichage (202) de ladite information d'invite d'association visant le dispositif cible comprend :
l'affichage de l'information d'invite d'association comprenant le type de dispositif du dispositif cible.

12. Procédé selon l'une quelconque des revendications 8 à 11, **caractérisé en ce que**, le message de notification porte en outre ledit second identifiant de compte correspondant audit compte de contrôle primaire associé au dispositif cible ; et la requête d'association de dispositif porte en outre le second identifiant de compte.

13. Serveur (1000) pour gérer des relations de contrôle entre un compte et un dispositif, comprenant :
un processeur ; et
une mémoire (1032) pour stocker des instructions exécutables par le processeur,
le processeur étant configuré pour :
recevoir une requête d'association de dispositif envoyée depuis un premier terminal, la requête d'association de dispositif portant un identifiant de dispositif d'un dispositif cible diffusé depuis le dispositif cible et un premier identifiant de compte correspondant à un compte connecté au niveau du premier terminal ;
déterminer un second identifiant de compte correspondant à un compte de contrôle primaire associé au dispositif cible ; et
transmettre un message de demande d'association à un second terminal où un compte correspondant au second identifiant de compte est connecté, le message de demande d'association portant le premier identifiant de compte ;
**caractérisé en ce que**, le message de demande d'association porte en outre l'identifiant de dispositif et le processeur est en outre configuré pour :
enregistrer le compte correspondant au premier identifiant de compte comme un compte de contrôle auxiliaire du dispositif cible si un premier message d'accusé de réception correspondant au message de demande d'association est reçu du second terminal, dans lequel le premier message d'accusé de réception porte un ou plusieurs droits de contrôle octroyés au premier terminal et sélectionnés par un utilisateur du second terminal parmi des options de tous les droits de contrôle sur le dispositif cible avant que l'utilisateur ne clique sur une touche de confirmation selon une information de demande d'association générée par le second terminal et affichée sous la forme des options lorsque le serveur transmet le message de demande d'association au second terminal.

14. Premier terminal (1100) pour gérer des relations de contrôle entre un compte et un dispositif, comprenant :
un processeur (1120) ; et
une mémoire (1104) pour stocker des instructions exécutables par le processeur (1120),
le processeur (1120) étant configuré pour :
recevoir un message de notification diffusé depuis un dispositif cible associé à un second identifiant de compte correspondant à un compte de contrôle primaire, le message de notification portant un identifiant de dispositif du dispositif cible ;
afficher une invite d'association visant le dispositif cible ;
transmettre à un serveur une requête d'association de dispositif portant l'identifiant de dispositif du dispositif cible et un premier identifiant de compte correspondant à un compte connecté localement si une instruction d'association visant le dispositif cible est reçue, de sorte que le premier compte d'utilisateur puisse servir de compte de contrôle auxiliaire du dispositif cible ; et
recevoir un message de notification de réussite d'association ou un message de notification d'échec d'association envoyé depuis le serveur en réponse à la requête d'association de dispositif ;
**caractérisé en ce que**, le message de notification de réussite d'association comprend un ou plusieurs droits de contrôle octroyés au premier terminal et sélectionnés par un utilisateur d'un second terminal parmi des options de tous les droits de contrôle sur le dispositif cible avant que l'utilisateur ne clique sur une touche de confirmation selon une information de demande d'association générée par le second terminal et affichée sous la forme des options lorsque le serveur, après la réception de la requête d'association de dispositif en provenance du premier terminal, transmet un message de demande d'association au second terminal.

15. Programme informatique comprenant des instructions, dans lequel lorsque les instructions sont exécutées par un processeur d'un serveur, le processeur exécute le procédé selon l'une quelconque des revendications 1 à 7.

16. Programme informatique comprenant des instructions, dans lequel lorsque les instructions sont exécutées par un processeur d'un terminal, le processeur exécute le procédé selon l'une quelconque des revendications 8 à 12.

17. Support enregistrable lisible par un ordinateur et sur lequel est enregistré le programme informatique selon la revendication 15 ou 16.
